(19) Europäisches Patentamt
European Patent Office
Office européen des brevets

(11) **EP 3 250 425 B1**

(12) **EUROPÄISCHE PATENTSCHRIFT**

(45) Veröffentlichungstag und Bekanntmachung des Hinweises auf die Patenterteilung:
**03.10.2018 Patentblatt 2018/40**

(21) Anmeldenummer: **15797881.8**

(22) Anmeldetag: **04.11.2015**

(51) Int Cl.:
**B60T 17/22** (2006.01)   **F16D 66/02** (2006.01)
**F16D 66/00** (2006.01)

(86) Internationale Anmeldenummer:
**PCT/EP2015/075679**

(87) Internationale Veröffentlichungsnummer:
**WO 2016/119929 (04.08.2016 Gazette 2016/31)**

(54) **VERSCHLEISSPROGNOSE BEI BREMSBELÄGEN**

WEAR FORECAST IN BRAKE LININGS

PRONOSTIC D'USURE DE GARNITURES DE FREIN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2015 AT 500642015**

(43) Veröffentlichungstag der Anmeldung:
**06.12.2017 Patentblatt 2017/49**

(73) Patentinhaber: **Siemens AG Österreich
1210 Wien (AT)**

(72) Erfinder: **PREHOFER, Boris Andre
A-8045 Graz (AT)**

(74) Vertreter: **Maier, Daniel Oliver
Siemens AG
Postfach 22 16 34
80506 München (DE)**

(56) Entgegenhaltungen:
**EP-B1- 1 384 638          DE-A1- 10 029 238
DE-A1-102007 035 332    US-A1- 2008 236 269**

**Beschreibung**

Die Erfindung betrifft ein Verfahren zur Vorhersage des Verschleißes bei Bremsbelägen insbesondere von Schienenfahrzeugen und eine Vorrichtung zur Durchführung des Verfahrens.

Bremsbeläge von Reibungsbremssystemen unterliegen im Einsatz einem Verschleiß, wodurch kontinuierlich die Belagdicke verringert wird. Unterschreitet ein Bremsbelag seine spezifizierte Mindestdicke, so muss er getauscht werden, da andernfalls Schäden am Bremssystem oder ein Nachlassen der Bremswirkung auftreten können.

Die Erkennung des zulässigen Grenzmaßes erfordert eine laufende Überwachung der Belagdicke durch technisch, zeitlich und finanziell aufwendige Verfahren. Darüber hinaus ist insbesondere bei teuren Sinterbelägen eine präzise Einschätzung der Belagdicke wichtig, um Belagwechsel vor Erreichen der entsprechenden Verschleißgrenzwerte zu vermeiden und somit die zur Verfügung stehende Verschleißreserve des Belags voll auszunützen.

Bei der Überwachung eines Bremsbelags ist auch eine mögliche asymmetrische Abnutzung, der sogenannte Schrägverschleiß zu berücksichtigen, da auch in Bezug auf diese Erscheinung spezifizierte Grenzwerte eingehalten werden müssen, bei deren Überschreitung ein Nachlassen der Bremswirkung auftreten kann.

Aus der EP 1 384 638 B1 sind eine Vorrichtung und ein Verfahren zur Überwachung des Funktions- oder Verschleißzustandes von Bremsbelägen oder Bremsscheiben einer Fahrzeugbremse bekannt.

Nach der Lehre dieser Schrift werden mittels Sensoren die Gleitgeschwindigkeit zwischen den Bremsbelägen und der Bremsscheibe während eines Bremsvorgangs, die Temperatur der Reibflächen zumindest eines Bremsbelags, und die Bremskraft während des Bremsvorgangs gemessen, sowie die Bremszeit des Bremsvorganges bestimmt und aus der Gleitgeschwindigkeit, der Temperatur, der Bremskraft, der Bremszeit, der Bremsbelagfläche, sowie aus materialspezifischen Parametern wie einer Korrelationskonstante und Exponenten der Verschleiß des Bremsbelages nach Ablauf der Bremsdauer ermittelt.

Der Erfindung liegt die Aufgabe zugrunde, die Anzahl der notwendigen Sensoren für eine Verschleißprognose bei Bremsbelägen zu verringern.

Erfindungsgemäß geschieht dies mit einem Verfahren gemäß Anspruch 1.

Vorteilhafte Ausgestaltungen der Erfindung ergeben sich aus den Unteransprüchen.

Die erfindungsgemäße technische Lösung weist eine geringe technische Komplexität und damit hohe Robustheit auf. Darüber hinaus ist sie kostengünstig realisierbar, da teure Sensoren wegfallen.

Durch die Parametrisierung des Modells über Felddaten sind ein starker Realitätsbezug und eine gute Genauigkeit in der Verschleißprognose gegeben.

Außerdem erfolgt durch diese Vorgehensweise unmittelbar auch eine Validierung des Modells.

Denkbar wäre allerdings auch eine Parametrisierung des Modells mittels Prüfstandversuchen.

Die Prognoserechnung ist auch in Bezug auf Schrägverschleiß möglich. Somit kann einerseits das Erreichen von Grenzwerten für Schrägverschleiß detektiert werden und es ist andererseits auch ein Aufschluss über Verbesserungen am Reibungsbremssystem (z.B. eine Optimierung des Druckpunkts zwischen Belag und Scheibe) zur Reduktion von Schrägverschleiß gegeben.

Die Erfindung wird anhand von Figuren näher erläutert. Sie zeigen beispielhaft:

Fig. 1 ein Flussdiagramm zur Ermittlung der Materialparameter und Koeffizienten der erfindungsgemäßen Vorschrift zur Bestimmung der Abnutzung von Bremsbelägen und

Fig.2 ein Flussdiagramm zur laufenden Prognose der Reststandzeit eines Bremsbelags im Betrieb eines Fahrzeugs.

Nach der Erfindung wird die Abnutzung von Bremsbelägen von Schienenfahrzeugen mit einem Verfahren bestimmt, bei dem gemäß der Vorschrift

$$\tilde{W} = C \cdot A \cdot p^{\alpha} \cdot v^{\beta} \cdot t_B{}^{\gamma} \cdot P^{\delta} \cdot T^{\varepsilon}$$

eine Verschleißrate $W$ ermittelt wird, mit

$C$ = Allgemeine Konstante
$A$ = Belagfläche
$p$ = Anpressdruck
$v$ = Gleitgeschwindigkeit
$t_B$ = Bremsdauer
$P$ = Bremsleistung
$T$ = Kontakttemperatur der Reibpaarung
$\alpha$ = Materialparameter Druck
$\beta$ = Materialparameter Geschwindigkeit
$\gamma$ = Materialparameter Bremsdauer
$\delta$ = Materialparameter Bremsleistung
$\varepsilon$ = Materialparameter Temperatur

Wesentliche Faktoren bei der Bestimmung der Verschleißrate $W$ sind Belagfläche $A$, Anpressdruck $p$, Gleitgeschwindigkeit $v$ und Bremsdauer $t_B$. Die Verwendung der Kontakttemperatur $T$ und der Bremsleistung $P$ ist optional, d.h. nicht zwingend erforderlich.

Während die Belagfläche $A$ sich aus den konstruktiven Merkmalen der Bremse ergibt, werden der Anpressdruck $p$, die Gleitgeschwindigkeit $v$ und die Bremsdauer $t_B$ während des Betriebs laufend ermittelt. Die Ermittlung des Anpressdrucks $p$ und der Gleitgeschwindigkeit erfolgt aus der Erfassung des Zylinderdrucks sowie der Fahrgeschwindigkeit und, unter Verwendung der geometrischen und kinematischen Eigenschaften des Bremssystems, einer rechnerischen Transformation dieser Größen.

Die Kontakttemperatur *T* und die Bremsleistung *P* können bei Verfügbarkeit geeigneter Rechenmodelle mittels Simulation bestimmt und in obiger Vorschrift optional verwendet werden. Falls unter bestimmten Betriebsbedingungen einer oder auch beide der genannten Werte nicht zur Verfügung stehen, wird dies dadurch berücksichtigt, dass die entsprechenden Materialparameter $\varepsilon$, $\delta$=0 gesetzt werden und so die jeweils zugehörigen Variablen Kontakttemperatur *T*, Bremsleistung *P* in der Vorschrift wirkungslos bleiben.

Die Bestimmung der Materialparameter $\alpha, \beta, \gamma, \delta, \varepsilon$ und der allgemeinen Konstante C erfolgt während Testfahrten bzw. während einer Betriebsbeobachtung, die in einem betrachteten Streckennetz mit einem geeigneten Systemen zur Erfassung von Zylinderdruck und Fahrgeschwindigkeit sowie optional zur Simulation von Kontakttemperatur *T* und Bremsleistung *P* ausgestatteten Referenzfahrzeug durchgeführt werden.

Nach jeder Testfahrt werden überdies die Bremsen untersucht und der gesamte tatsächliche Verschleiß $W_o$ d.h. die Abnutzung der Bremsbeläge während dieser Fahrt ermittelt.

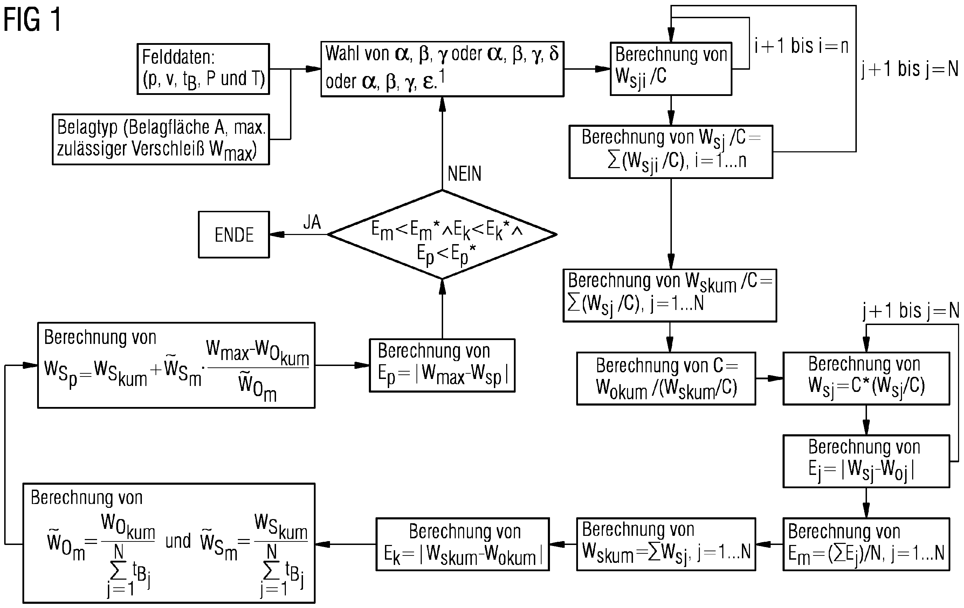

Die Ermittlung der Materialparameter $\alpha, \beta, \gamma, \delta, \varepsilon$ und die allgemeinen Konstante C erfolgt über ein iteratives Verfahren, wie es in Fig. 1 dargestellt ist. Der gemessene Gesamtverschleiß $W_o$ wird dazu mit einem berechneten Gesamtverschleiß $W_s$ verglichen.

Dazu werden die Ergebnisse jeder Testfahrt bzw. jedes Beobachtungszeitraums der Betriebsbeobachtung, d.h. die während der Testfahrt in *n* Zeitschritten ermittelten Werte für Anpressdruck *p*, Gleitgeschwindigkeit *v* und Bremsdauer $t_B$ und optional auch die Werte für Temperatur *T* oder Bremsleistung P einer Meßperiode zugeordnet.

Mit einer auf Erfahrungswerten basierenden ersten Auswahl von Materialparametern $\alpha, \beta, \gamma, \delta, \varepsilon$ werden danach für jeden Meßzeitpunkt *i* jeder Meßperiode *j* auf die allgemeine Konstante C normierte Verschleißwerte $W_{sji}$/C berechnet und daraus durch Summation der Verschleißwerte $W_{sji}$/C ein kumulierter normierter Gesamtverschleiß $W_{skum}$ /C ermittelt. Aus diesem und dem korrespondierenden gemessenen kumulierten Gesamtverschleiß $W_{okum}$ wird gemäß

$$C = W_{okum} / (W_{skum}/C)$$

ein Wert für die allgemeine Konstante C bestimmt.

Mit dem so ermittelten Wert der allgemeinen Konstante C werden aus den berechneten normierten Verschleißwerte für jede Meßperiode $\boldsymbol{W_{sj}/C} = \Sigma(\boldsymbol{W_{sji}/C})$ die berechneten Verschleißwerte für jede Meßperiode $\boldsymbol{W_{sj}}$ ermittelt, mit den gemessenen Verschleißwerten für jede Meßperiode $\boldsymbol{W_{oj}}$ verglichen und daraus eine durchschnittliche Abweichung

$\mathbf{E_m = (\Sigma E_j)/N}$, für **j = 1 ... N**

mit

$$E_j = |W_{sj} - W_{oj}|$$

Für die entsprechende Meßperiode bestimmt. Zusätzlich werden auch kumulierte Abweichungen über alle Meßperioden $\mathbf{E_k = |W_{skum} - W_{okum}|}$ und ein Prognosewert der Abweichung

$$E_p = |W_{max} - W_{sp}|$$

mit

$$W_{s_p} = W_{s_{kum}} + \tilde{W}_{s_m} \cdot \frac{W_{max} - W_{o_{kum}}}{\tilde{W}_{o_m}}$$

$$\tilde{W}_{o_m} = \frac{W_{o_{kum}}}{\sum_{j=1}^{N} t_{B_j}}$$

$$\tilde{W}_{s_m} = \frac{W_{s_{kum}}}{\sum_{j=1}^{N} t_{B_j}}$$

ermittelt.

Die Abweichungswerte $E_m, E_k, E_P$ werden mit vorgegebenen Maximalwerten $E_m{}^*, E_k{}^*, E_P{}^*$ verglichen und nur dann, wenn alle drei Werte unter dem jeweils zugehörigen Maximalwert liegen, also die Bedingung

$$E_m < E_m' \wedge E_k < E_k' \wedge$$

$$E_p < E_p'$$

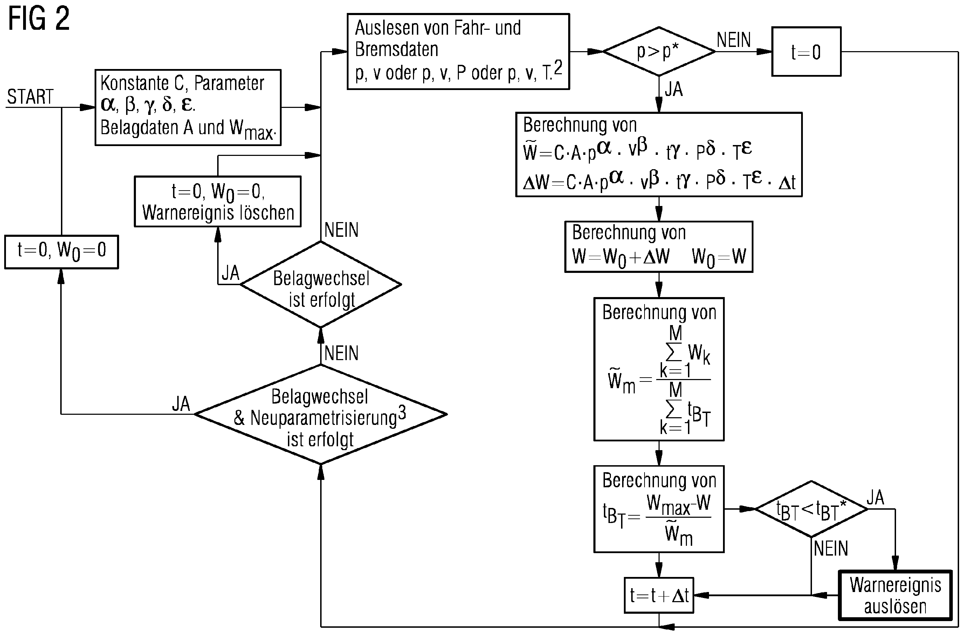

erfüllt ist, wird das Verfahren beendet und die aktuelle Auswahl von Materialparametern $\alpha, \beta, \gamma, \delta, \varepsilon$ für die im Betriebszustand durchzuführende Bestimmung der Abnutzung von Bremsbelägen von - mit dem zur Parametrisierung eingesetzten Referenzfahrzeug vergleichbaren Schienenfahrzeugen - mit dem in Fig. 2 dargestellten, erfindungsgemäßen Verfahren herangezogen.

Wenn hingegen zumindest eine der genannten Bedingungen nicht erfüllt ist, wird mit einem neuen veränderten Parametersatz das Verfahren wiederholt. Für den iterativen Rechenprozess wird ein numerisches Verfahren, wie es üblicherweise zur Lösung von nichtlinearen Gleichungssystemen zur Anwendung kommt wie beispielsweise ein sogenanntes Newton- oder Bisektionsverfahren eingesetzt.

Wie in Fig. 2 dargestellt werden im Betriebszustand in periodischen Zeitabständen von typisch 1-2 Sekunden der Anpressdruck $p$ (aus dem Zylinderdruck), die Gleitgeschwindigkeit $v$ (aus der Fahrgeschwindigkeit) und die Bremsdauer $t_B$ sowie optional auch die Temperatur $T$ oder die Bremsleistung $P$ ermittelt.

Wenn der Anpressdruck $p$ dabei einen vorgegebenen Wert $p^*$ übersteigt und somit ein Bremsvorgang angezeigt wird, der einen Verschleiß der Bremsbeläge nach sich zieht, wird mit den nun bekannten Werten der Materialparameter $\alpha$, $\beta$, $\gamma$, $\delta$, $\varepsilon$ und der Konstanten C gemäß der Vorschrift

$$\tilde{W} = C \cdot A \cdot p^{\alpha} \cdot v^{\beta} \cdot t_B{}^{\gamma} \cdot P^{\delta} \cdot T^{\varepsilon}$$

Eine Verschleißrate W ermittelt und aus dieser nach

$$\Delta W = C \cdot A \cdot p^{\alpha} \cdot v^{\beta} \cdot t^{\gamma} \cdot P^{\delta} \cdot T^{\varepsilon} \cdot \Delta t$$

ein Verschleißinkrement $\Delta W$ bestimmt, wobei $\Delta t$ den Zeitabstand zwischen zwei Datenerfassungs- bzw. Rechenvorgängen der Prognoseberechnung bezeichnet und das Verschleißinkrement $\Delta W$ den Verschleiß während dieses Zeitraums.

Aus dem Verschleißinkrement $\Delta W$ und einem bisherigen Verschleiß $W_n$ wird gemäß $W_{n+1} = W_n + \Delta W$ ein neuer Wert für den Verschleiß berechnet und nach

$$\tilde{W}_m = \frac{\sum_{k=1}^{M} W_k}{\sum_{k=1}^{M} t_{B_k}}$$

eine mittlere Verschleißrate $\tilde{W}_m$ bestimmt, wobei $t_{Bk}$ die Bremsdauer und $W_k$ den berechneten Verschleiß eines Bremsvorganges $k$ bezeichnen.
$\tilde{W}_m$

Mit den Werten für die mittlere Verschleißrate $\tilde{W}_m$, dem gültigen Verschleiß $W_{n+1}$ und einem maximal zulässigen Verschleiss $W_{max}$ können nun gemäß

$$t_{B_T} = \frac{W_{max} - W}{\tilde{W}_m}$$

eine Gesamtbremsdauer $t_{BT}$ bis zu einem erforderlichen Belagwechsel bestimmt und die Wartungsintervalle des Fahrzeuges entsprechend angepasst werden.

**Patentansprüche**

1. Verfahren zur Bestimmung der Abnutzung von Bremsbelägen von Schienenfahrzeugen **dadurch gekennzeichnet, dass** gemäß der Vorschrift

$$\tilde{W} = C \cdot A \cdot p^{\alpha} \cdot v^{\beta} \cdot t_B{}^{\gamma} \cdot P^{\delta} \cdot T^{\varepsilon}$$

Verschleißraten ($\tilde{W}$) ermittelt werden, mit

  $C$ = Allgemeine Konstante
  $A$ = Belagfläche
  $p$ = Anpressdruck
  $v$ = Gleitgeschwindigkeit
  $t_B$ = Bremsdauer
  $P$ = Bremsleistung
  $T$ = Kontakttemperatur der Reibpaarung
  $\alpha$ = Materialparameter Druck
  $\beta$ Materialparameter Geschwindigkeit
  $\gamma$ = Materialparameter Bremsdauer
  $\delta$ = Materialparameter Bremsleistung
  $\varepsilon$ = Materialparameter Temperatur

und dass aus den Verschleißraten ein Verschleiß ermittelt wird.

2. Verfahren nach Anspruch 1, **dadurch gekennzeichnet, dass** in einem Parametrisierungsprozess mit Messungen in vorgegebenen Zeitintervallen die Belagdicken, die Gleitgeschwindigkeit ($v$), der Anpressdruck ($p$), die Bremsdauer ($t_B$), die Temperatur ($T$), die Bremsleistung ($P$) die Konstante ($C$) sowie die Materialparameter ($\alpha$, $\beta$, $\gamma$, $\delta$, $\varepsilon$) bestimmt werden;

3. Verfahren nach Anspruch 1, **dadurch gekennzeichnet, dass** in einem Parametrisierungsprozess mit Messungen in vorgegebenen Zeitintervallen die Temperatur ($T$) und/oder die Bremsleistung (P) nicht bestimmt und verwendet werden und der Einfluss der nicht bestimmten Werte in der Berechnungsvorschrift durch geeignete Wahl der Materialparameter für die Temperatur ($\varepsilon$) und/oder für die Bremsleistung ($\delta$) ausgeschaltet wird.

4. Verfahren nach Anspruch 2 oder 3, **dadurch gekennzeichnet, dass** der Parametrisierungsprozess bei Testfahrten mit einem Referenzfahrzeug erfolgt.

5. Verfahren nach Anspruch 2 oder 3, **dadurch gekennzeichnet, dass** der Parametrisierungsprozess bezüglich eines Referenzfahrzeugs auf einem Prüfstand erfolgt.

6. Vorrichtung welche zur Durchführung eines der Verfahren nach einem der Ansprüche 1 bis 5 eingerichtet ist, **dadurch gekennzeichnet, dass** Mittel zur Bestimmung der Belagdicken, der Gleitgeschwindigkeit (*v*), des Anpressdrucks (*p*), der Bremsdauer (*t$_B$*), der Konstanten (*C*) sowie der Materialparameter (*α, β, γ, δ, ε*), gegebenenfalls der Temperatur (*T*) und der Bremsleistung (*P*) während eines Parametrisierungsprozesses sowie Mittel zur Bestimmung von Verschleißraten (*W*) und eines Verschleißes vorgesehen sind.

**7.** Verfahren nach einem der Ansprüche 1 bis 5, **dadurch gekennzeichnet, dass** aus den Werten für eine mittlere Verschleißrate (*W$_m$*), einem gültigen Verschleiß (*W$_{n+1}$*) und einem maximal zulässigen Verschleiss (*W$_{max}$*) gemäß

$$t_{B_T} = \frac{W_{\max} - W}{\overset{\sim}{W}_m}$$

eine Gesamtbremsdauer (*t$_{BT}$*) bis zu einem erforderlichen Belagwechsel bestimmt und die Wartungsintervalle des Fahrzeuges entsprechend angepasst werden.

**8.** Vorrichtung welche zur Durchführung des Verfahrens nach Anspruch 7 eingerichtet ist, **dadurch gekennzeichnet, dass** Mittel zur Bestimmung der Belagdicken, der Gleitgeschwindigkeit (*v*), des Anpressdrucks (*p*), der Bremsdauer (*t$_B$*), der Konstanten (*C*) sowie der Materialparameter (*α, β, γ, δ, ε*), gegebenenfalls der Temperatur (*T*) und der Bremsleistung (*P*) während eines Parametrisierungsprozesses- sowie Mittel zur Bestimmung von Verschleißraten (*$\tilde{W}$*) und eines Verschleißes vorgesehen sind und dass Mittel zur Bestimmung einer Gesamtbremsdauer (t$_{BT}$) bis zu einem erforderlichen Belagswechsel und zur Anpassung der Wartungsintervalle des Fahrzeuges vorgesehen sind.

**Claims**

**1.** Method for determining the abrasion of brake linings of rail vehicles, **characterised in that** wear rates (*$\tilde{W}$*) are determined in accordance with the formula

$$\tilde{W} = C \cdot A \cdot p^{\alpha} \cdot v^{\beta} \cdot t_B{}^{\gamma} \cdot P^{\delta} \cdot T^{\varepsilon}$$

where

C = general constant
A = lining surface
p = contact pressure
v = sliding speed
t$_B$ = braking time
P = brake power
T = contact temperature of the friction pairing
α = material parameter pressure

β = material parameter speed
γ = material parameter braking time
δ = material parameter brake power
ε = material parameter temperature

and that a wear is determined from the wear rates.

**2.** Method according to claim 1, **characterised in that** the lining thicknesses, the sliding speed (*v*), the contact pressure (*p*), the braking time (*t$_B$*), the temperature (*T*), the brake power (*P*), the constant (*C*) and the material parameters (*α, β, y, δ, ε*) are determined in a parameterisation process by means of measurements at predefined time intervals.

**3.** Method according to claim 1, **characterised in that** the temperature (*T*) and/or the brake power (*P*) are not determined and used in a parameterisation process by means of measurements at predefined time intervals, and the influence of the values that have not been determined is eliminated in the calculation formula by suitable selection of the material parameters for the temperature (*ε*) and/or the brake power (*δ*).

**4.** Method according to claim 2 or 3, **characterised in that** the parameterisation process takes place in the context of test runs using a reference vehicle.

**5.** Method according to claim 2 or 3, **characterised in that** the parameterisation process is performed in relation to a reference vehicle on a test stand.

**6.** Device which is configured for the purpose of implementing one of the methods according to one of claims 1 to 5, **characterised in that** means are provided for determining the lining thickness, the sliding speed (*v*), the contact pressure (*p*), the braking time (*t$_B$*), the constant (*C*), the material parameters (*a, β, y, δ, ε*) and optionally the temperature (*T*) and the brake power (*P*) during a parameterisation process, and means are provided for determining wear rates (*$\tilde{W}$*) and a wear.

**7.** Method according to one of claims 1 to 5, **characterised in that** the values for an average wear rate (*$\tilde{W}_m$*), a valid wear (*W$_{n+1}$*) and a maximum allowable wear (*W$_{max}$*) are applied in the formula

$$t_{B_T} = \frac{W_{\max} - W}{\tilde{W}_m}$$

to determine a total braking time (*t$_{BT}$*) until a lining replacement is required, and the maintenance intervals of the vehicle are adapted correspondingly.

**8.** Device which is configured for the purpose of implementing the method according to claim 7, **characterised in that** means are provided for determining the lining thicknesses, the sliding speed ($v$), the contact pressure ($p$), the braking time ($t_B$), the constant ($C$), the material parameters ($\alpha, \beta, \gamma, \delta, \varepsilon$) and optionally the temperature ($T$) and the brake power ($P$) during a parameterisation process,

and means are provided for determining wear rates ($\tilde{W}$) and a wear, and that means are provided for determining a total braking time ($t_{BT}$) until a lining replacement is required and for adapting the maintenance intervals of the vehicle.

## Revendications

1. Procédé de détermination de l'usure de garnitures de frein de véhicules ferroviaires, **caractérisé en ce que** les cadences d'usure $\tilde{W}$ sont déterminées selon la formule suivante :

$$\tilde{W} = C \cdot A \cdot p^{\alpha} \cdot v^{\beta} \cdot t_B{}^{\gamma} \cdot P^{\delta} \cdot T^{\varepsilon}$$

dans laquelle

> $C$ est une constante générale,
> $A$ est la surface de garniture,
> $p$ est la pression de contact
> $v$ est la vitesse de glissement,
> $t_B$ est la durée de freinage,
> $P$ est la puissance de freinage,
> $T$ est la température de contact du couple de frottement,
> $\alpha$ est le paramètre de matériau pour la pression,
> $\beta$ est le paramètre de matériau pour la vitesse,
> $\gamma$ est le paramètre de matériau pour la durée de freinage,
> $\delta$ est le paramètre de matériau pour la puissance de freinage,
> $\varepsilon$ est le paramètre de matériau pour la température,

et **en ce qu'**une usure est déterminée à partir des cadences d'usure.

2. Procédé selon la revendication 1, **caractérisé en ce que**, dans un processus de paramétrage comportant des mesures à des intervalles de temps prédéterminés, les épaisseurs de garniture, la vitesse de glissement ($v$), la pression de contact ($p$), la durée de freinage ($t_B$), la température ($T$), la puissance de freinage ($P$), la constante ($C$) et les paramètres de matériau ($\alpha, \beta, \gamma, \delta, \varepsilon$) sont déterminés.

3. Procédé selon la revendication 1, **caractérisé en ce que**, dans un processus de paramétrage comportant des mesures à des intervalles de temps prédéterminés, la température ($T$) et/ou la puissance de freinage ($P$) ne sont pas déterminées ni utilisées et l'incidence des valeurs non déterminées dans la formule de calcul est éliminée par une sélection appropriée des paramètres de matériau pour la température ($\varepsilon$) et/ou pour la puissance de freinage ($\delta$).

4. Procédé selon la revendication 2 ou 3, **caractérisé en ce que** le processus de paramétrage s'effectue lors d'essais sur route avec un véhicule de référence.

5. Procédé selon la revendication 2 ou 3, **caractérisé en ce que** le processus de paramétrage concernant un véhicule de référence s'effectue sur un banc d'essai.

6. Dispositif conçu pour mettre en oeuvre un procédé selon l'une des revendications 1 à 5, **caractérisé en ce que** des moyens pour déterminer les épaisseurs de garniture, la vitesse de glissement ($v$), la pression de contact ($p$), la durée de freinage ($t_B$), les constantes ($C$) et les paramètres de matériau ($\alpha, \beta, \gamma, \delta, \varepsilon$), éventuellement la température ($T$) et la puissance de freinage ($P$) durant le processus de paramétrage sont prévus ainsi que des moyens pour déterminer des cadences d'usure ($W$) et une usure.

7. Procédé selon l'une des revendications 1 à 5, **caractérisé en ce qu'**une durée de freinage totale ($t_{BT}$) jusqu'à un changement de garniture nécessaire est déterminée à partir des valeurs d'une cadence d'usure moyenne ($W_m$), d'une usure valide ($W_{n+1}$) et d'une usure maximale admissible ($W_{max}$), selon la formule

$$t_{B_T} = \frac{W_{\max} - W}{\tilde{W}_m}$$

et **en ce que** les intervalles de maintenance du véhicule sont adaptés conformément à celle-ci.

8. Dispositif conçu pour mettre en oeuvre un procédé selon la revendication 7, **caractérisé en ce que** des moyens pour déterminer les épaisseurs de garniture, la vitesse de glissement ($v$), la pression de contact ($p$), la durée de freinage ($t_B$), les constantes ($C$) et les paramètres de matériau ($\alpha, \beta, \gamma, \delta, \varepsilon$), éventuellement la température ($T$) et la puissance de freinage ($P$) durant un processus de paramétrage sont prévus ainsi que des moyens pour déterminer des cadences d'usure $\tilde{W}$ et une usure et **en ce que** des moyens pour déterminer une durée de freinage totale ($t_{BT}$) jusqu'à un changement de garniture rendu nécessaire et pour adapter les intervalles de maintenance du véhicule conformément à celle-ci sont prévus.

FIG 1

Felddaten:
(p, v, $t_B$, P und T)

Belagtyp (Belagfläche A, max. zulässiger Verschleiß $W_{max}$)

Wahl von α, β, γ oder α, β, γ, δ oder α, β, γ, ε.[1]

Berechnung von $W_{sji}/C$

i+1 bis i=n

j+1 bis j=N

Berechnung von $W_{sj}/C = \sum(W_{sji}/C)$, i=1...n

Berechnung von $W_{skum}/C = \sum(W_{sj}/C)$, j=1...N

Berechnung von $C = W_{okum}/(W_{skum}/C)$

j+1 bis j=N

Berechnung von $W_{sj} = C*(W_{sj}/C)$

Berechnung von $E_j = |W_{sj}-W_{oj}|$

Berechnung von $E_m = (\sum E_j)/N$, j=1...N

Berechnung von $W_{skum} = \sum W_{sj}$, j=1...N

Berechnung von $E_k = |W_{skum}-W_{okum}|$

Berechnung von
$\tilde{W}_{O_m} = \dfrac{W_{O_{kum}}}{\sum\limits_{j=1}^{N} t_{B_j}}$ und $\tilde{W}_{S_m} = \dfrac{W_{S_{kum}}}{\sum\limits_{j=1}^{N} t_{B_j}}$

Berechnung von
$W_{S_p} = W_{S_{kum}} + \tilde{W}_{S_m} \cdot \dfrac{W_{max}-W_{O_{kum}}}{\tilde{W}_{O_m}}$

Berechnung von $E_p = |W_{max}-W_{sp}|$

$E_m < E_m^* \wedge E_k < E_k^* \wedge E_p < E_p^*$

NEIN

JA

ENDE

EP 3 250 425 B1

# FIG 2

START → Konstante C, Parameter $\alpha$, $\beta$, $\gamma$, $\delta$, $\varepsilon$. Belagdaten A und $W_{max}$.

Auslesen von Fahr- und Bremsdaten p, v oder p, v, P oder p, v, T.[2]

$p > p^*$ — NEIN → $t = 0$

JA

Berechnung von
$$\tilde{W} = C \cdot A \cdot p^\alpha \cdot v^\beta \cdot t^\gamma \cdot P^\delta \cdot T^\varepsilon$$
$$\Delta W = C \cdot A \cdot p^\alpha \cdot v^\beta \cdot t^\gamma \cdot P^\delta \cdot T^\varepsilon \cdot \Delta t$$

Berechnung von
$$W = W_0 + \Delta W \qquad W_0 = W$$

Berechnung von
$$\tilde{W}_m = \frac{\sum_{k=1}^{M} W_k}{\sum_{k=1}^{M} t_{BT}}$$

Berechnung von
$$t_{BT} = \frac{W_{max} - W}{\tilde{W}_m}$$

$t_{BT} < t_{BT}^*$ — JA → Warnereignis auslösen

NEIN → $t = t + \Delta t$

t=0, $W_0$=0, Warnereignis löschen

Belagwechsel ist erfolgt — JA / NEIN

$t = 0$, $W_0 = 0$

Belagwechsel & Neuparametrisierung[3] ist erfolgt — JA / NEIN

EP 3 250 425 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1384638 B1